# EUROPEAN PATENT APPLICATION

(11) **EP 3 939 869 A1**
(43) Date of publication of application: **19.01.2022**
(21) Application number: 21183433.8
(22) Date of filing: 02.07.2021
(51) Int. Cl.: B62J 6/027, B62J 17/02

(54) **HEADLAMP UNIT FOR A SADDLE-TYPE MOTORCYCLE**

(30) Priority: 16.07.2020 IN 202041030242
(71) Applicant: TVS Motor Company Limited, 600006 Chennai (IN)
(72) Inventor: Ravisankar, Rajamani, 600 006 Chennai (IN); Navalli, Veeranna Mahadevappa, 600 006 Chennai (IN); Jebaraj, Solomon Duraisamy Mathankumar, 600 006 Chennai (IN); Goka Balu, Ravikumar, 600 006 Chennai (IN); Murthy, Thejasvi Vasudeva, 600 006 Chennai (IN)
(74) Representative: Patentanwaltskanzlei Matschnig & Forsthuber OG

(57) **Abstract**

The present invention relates exclusively, to a headlamp assembly for a two-wheeled vehicle. The at least one headlamp unit (111) includes a cowl assembly (200C). the cowl assembly (200C) and the at least one headlamp unit (111) are coupled to a structural member (300) configured to be attached to at least a portion of the vehicle body frame (102), said structural member (300) is configured to receive at least a portion of at least one mirror assembly (201, 202), a display member bracket (207), and a guiding-member assembly (208).

## Description

### FIELD OF THE INVENTION

The present invention relates generally to a headlamp assembly of a vehicle and more particularly, but not exclusively, to a headlamp assembly for a two-wheeled vehicle.

### BACKGROUND OF THE INVENTION

A two-wheeled vehicle is provided with a headlamp assembly to enable the rider for better visibility during low light conditions. The headlamp assembly comprises of a front housing portion and a rear-housing portion. The front housing portion includes a light source and a reflector, the reflector reflects the light from the light source in a predetermined manner so that the luminous intensity of the headlamp assembly conforms to the statutory regulations. The headlamp for lighting a frontward area of the two-wheeled vehicle is disposed at a distinguishable location in a front portion of the vehicle body. The front housing portion comprises, among other parts, the headlamp, a license plate, and a visor all of which are secured together. The rear-housing portion is attached posterior to the headlamp front housing portion whereas the instrument cluster sub-assembly comprises primarily of a vehicle speed display device and a fuel indicator.

### BRIEF DESCRIPTION OF THE DRAWINGS

The present invention will now be briefly described with reference to the accompanying drawings.
Figure 1 illustrates a side view of a two-wheeled vehicle, for example, a motorcycle according to an embodiment.
Figure 2 illustrates a front view of a front headlamp structure assembly with peripheral parts for brevity according to an embodiment of the present invention.
Figure 3 illustrates an exploded view of the headlamp assembly.
Figure 4 illustrates a sectional view of the front structure assembly as taken along R-R axis as shown in the Figure 2.
Figure 5 illustrates an exploded perspective view of a support structure.
Figure 6 illustrates a rear view of the front structure assembly as mounted to the frame assembly.
Figure 7 illustrates a sectional view of the front structure assembly taken along L-L' axis as illustrated in the Figure 8.

### DETAILED DESCRIPTION OF THE INVENTION

Generally, in a two-wheeled vehicle configured for usage under high speeds, the headlamp assembly required is also of high capacity configuration with greater luminosity and also with greater wide-angle view. One such requirement of the headlamp assembly for vehicles operable at higher speeds can be achieved by introducing dual lights inside the headlamp assembly. However, such dual lights make the headlamp assembly heavy. The supporting of the heavier headlamp assembly with dual lights there within becomes a cumbersome exercise. In order to achieve the same, a number of parts including numerous brackets and other supporting structures have to be incorporated. Doing the same increases the number of parts and also cost in achieving such a complex design. Further, the heavier headlamp assembly over time can tend to sag downwardly dislocating from its originally assembled position. Such a sagged headlamp assembly may interfere with the surrounding parts that are disposed lower to the headlamp assembly. The sagged heavier structure of the headlamp assembly falling or rubbing against the other vehicular parts may cause undesired damage to the other vehicular parts. Furthermore, may also lead to damage to the parts, which again calls for frequent servicing and also may lead to replacement of the vehicular parts. Heavy headlamp unit also deteriorates the manoeuvrability of the vehicle owing to excess steering inertia.

Furthermore, a conventional headlamp assembly includes a cowl assembly configured to support the headlamp assembly completely. The cowl assembly is mostly an integral member. Mostly, such an integral cowl assembly includes one whole cowl for supporting a front portion of the headlamp and another whole cowl for supporting a rear portion of the headlamp assembly. The manufacturability of such huge cowl assembly becomes a complex procedure. Further, if any damage occurs to the cowl assembly due to external impacts, the entire cowl assembly has to be replaced. Furthermore, the serviceability of the headlamp underlying the cowl assembly and also serviceability of other parts disposed inside the cowl assembly is a tedious process, which includes removal of the entire cowl assembly to access the headlamp and other parts. Particularly, even to service a local region inside the headlamp assembly, the removal or disassembling of the entire cowl assembly becomes essential. This is a time-consuming process. Furthermore, the entire cowl assembly including a whole front cowl and a rear cowl has to be supported by one or more metal brackets. The usage of one or more metal brackets further adds to the weight of the headlamp assembly, which again causes forwardly sagging of the headlamp assembly.

Furthermore, the flexibility in styling and providing different colours for the cowl assembly is not possible with the cowl assembly including a whole front cowl and a whole rear cowl. This again adds to the compromise on the aesthetics of the vehicle.

Therefore, there is a need for a simpler and cost-effective headlamp assembly which overcomes all above problems and other problems of known art.

According to an embodiment of the present invention, the headlamp assembly the headlamp assembly includes a structural member that is connected to at least a portion of a vehicle body frame. The structural member is preferably made of polymer, which is lighter as compared to conventional metal brackets. This makes the headlamp assembly lighter. The headlamp assembly mounted to the vehicle body frame is disposed away from a handlebar assembly of the vehicle. Such an independent handlebar provides for a well-defined clearance which is achieved between the handlebar assembly and a headlamp assembly, enabling ease of maneuverability therebetween.

According to an embodiment of the present invention, the headlamp assembly includes the headlamp housing, also called as a cowl assembly configured with plurality of covers. These plurality of split covers provide flexibility to disassemble or replace each split part whenever there is damage or during servicing. The flexibility of usage of multiple materials as required for a particular region of the headlamp housing can be achieved by the multiple split parts. Such usage of suitable material wherever required provides better fit and finish. Therefore, any see through gaps or undesired clearance between the multiple split parts can be eliminated. This further prevents any damage that may occur due to one or more distorted split parts that may rub against other parts, or cause rattling. Hence, a cost-effective headlamp assembly is obtained.

Further, a well-defined clearance between the headlamp assembly and the handlebar assembly enhances the aesthetic appeal of the vehicle.

Further, the multiple split parts, being smaller in size as compared to single large part, are more stable as compared to a single huge part in terms of their manufacturing dimensions. The multiple split parts are less prone to frequent breakage like the huge single part.

According to an embodiment of the present invention, the headlamp assembly is enclosed within a headlamp housing comprising numerous cowls.

Further, according to an embodiment of the present invention, a single mounting is configured to receive plurality of vehicular parts including at least one mirror assembly, a mirror assembly bracket, a display plate and one or more cushioning members. The single mounting during assembly saves assembly time and also cost.

These and other advantages of the present subject matter would be described in greater detail in conjunction with the figures in the following description. The present subject matter is further described with reference to accompanying figures. It should be noted that the description and figures merely illustrate principles of the present subject matter. Various arrangements may be devised that, although not explicitly described or shown herein, encompass the principles of the present subject matter. Moreover, all statements herein reciting principles, aspects, and examples of the present subject matter, as well as specific examples thereof, are intended to encompass equivalents thereof.

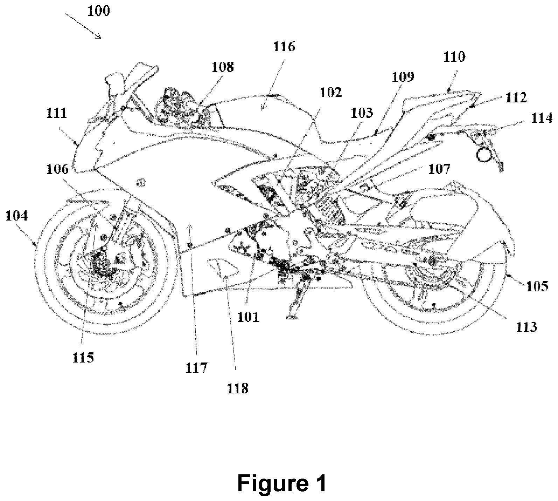

Figure 1 illustrates a side view of a two-wheeled vehicle, for example, a motorcycle according to an embodiment. The motorcycle 100 according to an embodiment includes a front wheel 104 steered by a handlebar 108 and a rear wheel 105 supported by a swing arm 113. Steering assembly parts including the handlebar 108 and the front wheel 104 are supported for pivotal steering operation on a head pipe (not shown) at the front end of the vehicle body frame 102. The vehicle body frame 102 also includes a rear body frame 103. A rider seat 109 for a rider and a seat for a pillion rider 110 are placed rearward to a fuel tank 116. An engine assembly 101 is disposed below the fuel tank 116. A front fender 115 is provided above the front wheel 104 to avoid the said motorcycle 100 and its occupants from being splashed with mud. Likewise, a rear fender 114 is placed above the rear wheel 105, and to the outer side in the radial direction of rear wheel 105. The rear fender 114 inhibits rainwater or the like from being thrown up by rear wheel 105.

The swing arm 113 along with a rear suspension assembly 107 is supported at a rear portion thereof for pivotal motion and upward and downward rocking motion on the rear side of a lower portion of the vehicle body frame 102. A front suspension assembly 106 including a pair of front forks for providing better ride comfort to the rider is provided in two-wheeled motorcycle 100. In general terms, the shock absorbers help cushion vehicles on uneven roads. In the two-wheeled motorcycle, shock absorbers reduce the effect of travelling over rough ground, leading to improved ride quality and vehicle handling. The motorcycle 100 further comprises of at least one headlamp unit 111, a tail lamp assembly 112 and at least two turn signal lamps.

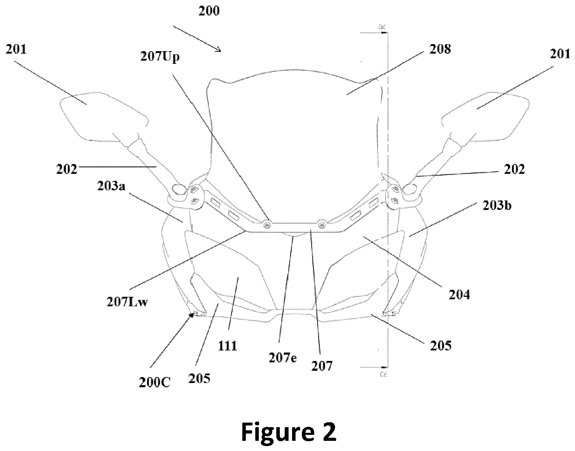

Figure 2 illustrates a front view of a front headlamp structure assembly with peripheral parts for brevity according to an embodiment of the present invention. The front structure assembly 200 includes a cowl sub-assembly 200C. The cowl assembly 200C comprises of plurality of covers. The plurality of covers includes pair of side cowls 203a, 203b, a bottom cowl 205, and a front cowl 204. The plurality of covers is configured to cover and protect the at least one headlamp unit 111. The front structure assembly 200 also includes a display member bracket 207. The display member bracket 207 is disposed over and across a guiding-member assembly 208. The guiding-member assembly 208 is disposed upwardly to the at least one headlamp unit 206 housed in the cowl assembly 200C, when viewed from the front direction. The guiding-member assembly 208 guides the flowing atmospheric air to flow above the rider. Such that, during higher speeds, the flowing atmospheric air does not interfere with the rider's eyes that may lead to discomfort to the rider while riding the vehicle.

According to an embodiment of the present invention, the display member bracket 207 is disposed at a proximity to a lower end point 207e of the guiding-member assembly 208. A lower peripheral surface 207Lw of the display member bracket 207 is disposed to be at a substantially same horizontal position as that of a lower end point 207e of the guiding-member assembly 208. This way, the entire surface of the guiding-member assembly 208 is in its entirety available for smooth flow of the atmospheric air without any distraction that may occur due to other interfering vehicular parts. The smooth flow of the atmospheric air results in guiding of the flowing air as desired and the same can be achieved due to the particular design profile of the guiding-member assembly 208 as in the present invention.

Further, the cowl sub-assembly 200C also includes a pair of rear covers 210a, 210b (not shown). The pair of rear covers 210a, 210b are also received by the structural member 300 (not shown).

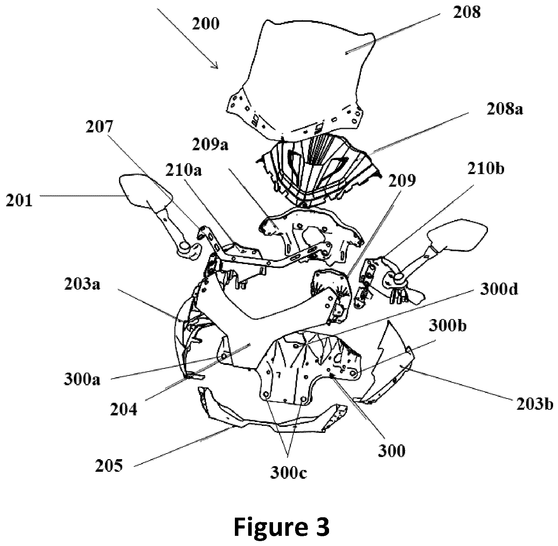

Figure 3 illustrates an exploded view of the headlamp assembly. According to an embodiment of the present invention, the exploded view, includes an exploded cowl sub-assembly (200C- shown in Figure 2), a primary support structure 300, a display member 209 and a display housing 209a, a guiding-member assembly 208, and a guiding member support structure 208a. The cowl sub-assembly (200C-shown in Figure 2) includes the right-side cowl 203a, the left side cowl 203b, the bottom cowl 205, and a front cowl 204. The support structure 300 is an integral structure configured to provide a single-point mounting of the front cowl 204, at least one mirror assembly 201, 202, and the display member bracket 207. The support structure 300 is configured to include a right-side receiving portion 300a, a left side receiving portion 300b, a plurality of bottom receiving portions 300c, and a top receiving portion 300d. The right-side receiving portion 300a, and the left-side receiving portion is capable of receiving the right-side portion and the left side portion of the at least one headlamp unit 111 (now shown), and the bottom receiving portion 300c is capable of receiving a bottom portion of the at least one headlamp unit 111. The top receiving portion 300d is capable of mounting at least a portion of the guiding member support structure 208a.

The support structure 300 being an integrated member provides a simple and improved mounting of the at least one headlamp unit 111, and the guiding member support structure 208a. Therefore, the support structure 300 provides a sub assembly of the at least one headlamp unit 111, and the guiding member support structure 208a. Since, all the portions of the at least one headlamp unit 111 is well supported by the support structure, a stable mounting and support is provided to the at least one headlamp unit 111.

Furthermore, the forwardly sagging of the at least one headlamp unit 111 is prevented by the support structure 300 as provided by the present subject matter.

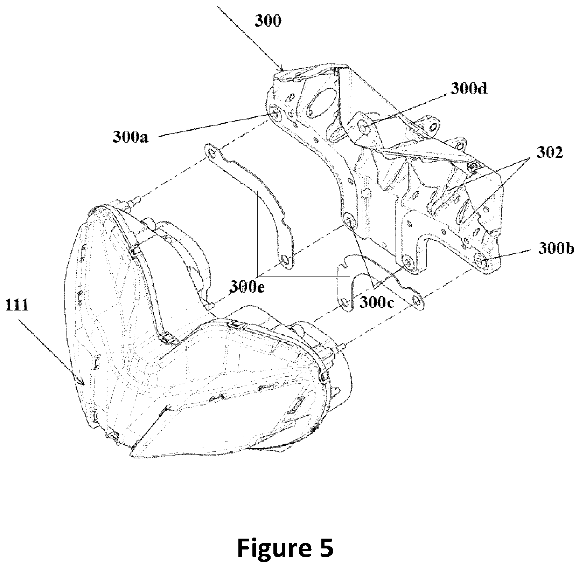

The assembly of the at least one headlamp unit 111, and the guiding member support structure 208a does not have to be carried out in plurality of locations, instead, the assembly can be carried out on one single integrated support structure 300. Unlike, the conventional art, wherein the at least one headlamp unit 111, and the guiding member support structure 208a are mounted at two different locations or to the other vehicular panels for support. As per the way described in the current invention, a simple mounting procedure can be carried out. Further, the support structure is made up of resin, as a result, a light weight support structure is obtained that includes plurality of reinforcements (shown in Figure 5) to provide required structural strength to support the entire cowl assembly 300C. Therefore, the support structure that is light in weight does not add on to the weight of the at least one headlamp unit 111.

All the cowl members of the cowl sub-assembly 200C are designed and configured such that they are securely mounted with the support structure 300 and the cowl sub-assembly 200C provides protection to the at least one headlamp unit from all the directions. This way, the leakage of the light beam from the at least one headlamp unit 111 will not occur and instead the functionality of the headlamp unit is achieved as per the requirement of the rider.

The right-side cowl 203a, and the left side cowl 203b are detachably attached to the bottom cowl 205 at one end and to the pair of rear covers 210a, 210b respectively at the other end.

The front structure assembly 200 includes a guiding member assembly 208. The guiding member assembly 208 is configured to protect the rider from wind, rain and dust.

The display housing 209a is an integrated part of the cowl sub-assembly 200C. The right-side cowl 203a and the left side cowl 203b are configured to be completely symmetric and aligned with each other to provide alignment for the display housing 209a and to accommodate improved mounting of the display member 209. Such an improved mounting eliminates any see-through gaps that might occur due to poor-fit and finish. Further, the dripping of the rain water, dust and other foreign particles that may enter into the critical electrical components and wiring harnesses is prevented.

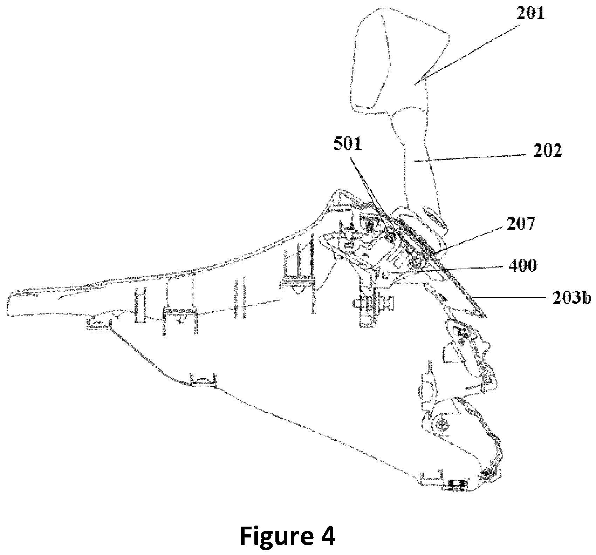

Figure 4 illustrates a sectional view of the front structure assembly as taken along R-R axis as shown in the Figure 2. The section is taken along mounting point of the at least one mirror assembly 201, 202, the display member bracket 207, and the right-side cowl 203a, on a left side of the front structure assembly. All the three components are mounted to a secondary structural member 400. The secondary structural member 400 provides a single-point mounting of the above said components. The single-point mounting is enabled by the one or more mounting members 501 that mount the at least one mirror assembly 201, 202, the display member bracket 207, and the left-side cowl 203b to the secondary structural member 400.

The single- point mounting requirement contributes to reduction in assembly time and also reduced cost, as the single-point mounting eliminates multiple mountings of the multiple parts at various locations.

Further, the cowl-sub assembly in its entirety is configured to support, the at least one headlamp assembly (now seen), being a heavy headlamp and also achieve stable support of the at least one headlamp assembly at high speeds.

The secondary structural member 400 is also provided on the right side of the front structure assembly and the mounting of the at least one mirror assembly 201, 202, the display member bracket 207, and the right-side cowl 203a is symmetric to that on the left side of the front structure assembly.

Figure 5 illustrates an exploded perspective view of a support structure. The support structure is configured to support the cowl sub-assembly (200C not shown) in its entirety and in turn, that is configured to support the at least one headlamp unit 111. According to an embodiment of the present invention, the support structure 300 is configured to include the right-side receiving portion 300a, a left side receiving portion 300b, plurality of bottom receiving portion 300c, and a top receiving portion 300d. All these portions are capable of receiving the at least one headlamp unit 111 entirely. Further, the at least one headlamp unit 111 is mounted to the support structure 300 through one or more mounting brackets 300e. The mounting brackets 300e are sandwiched between the support structure 300 and the at least one headlamp unit 111.

The support structure 300 is configured to support the entire headlamp unit 111 along with the inner parts of the headlamp unit. The support structure 300 includes plurality of reinforcing members 302 the provide required structural support to the support structure 300. Such that the support structure 300 functions as a rigid member that can entirely support the at least one headlamp unit 111.

In an embodiment, the shape of the support structure 300 is configured to be in conformity with the shape of the rear side of the at least one headlamp unit 111. The conformity of the shape therebetween enables the support structure 300 to adequately hold/support the particular portion of the at least one headlamp unit 111 being mounted thereto of the support structure 300.

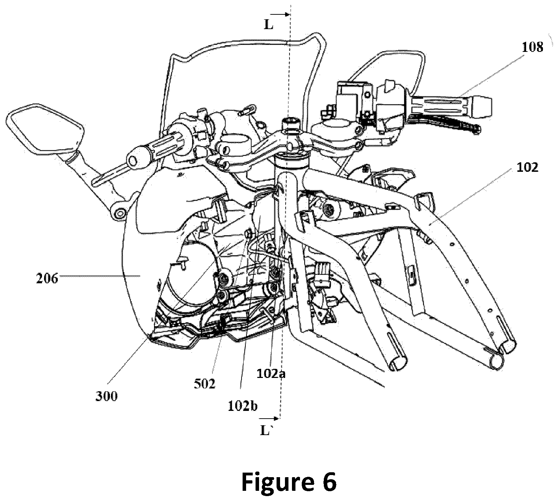

Figure 6 illustrates a rear view of the front structure assembly as mounted to the frame assembly. As depicted in the figure, the support structure 300 is mounted to an extended frame member 102b of the head tube 102a of the frame assembly 102. The handlebar assembly 108 is disposed above the at least one headlamp unit 111 and is independent of the at least one headlamp unit 111.

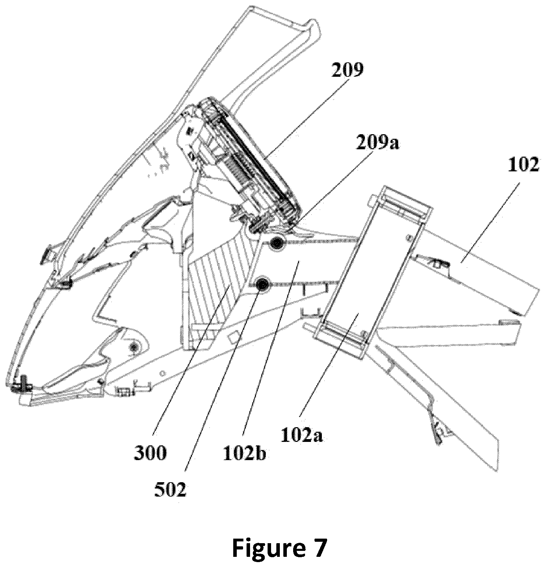

Figure 7 illustrates a sectional view of the front structure assembly taken along L-L' axis as illustrated in the Figure 8. The display housing 209a is an integrated part of the cowl sub-assembly 200C (not shown). The right-side cowl 203a and the left side cowl 203b are configured to be completely symmetric and aligned with each other to provide alignment for the display housing 209a and to accommodate This way, the handlebar assembly 108 is made independent of the at least one headlamp unit 111. The vibrations and jerks from the handlebar assembly 108 are not being transferred to the at least one headlamp unit 111. The stability of the cowl assembly is improved and proper protection to the at least one headlamp unit is provided. Further, sagging and mis alignment of the at least one headlamp unit 111 is prevented.

Independent handle bar assembly 108 with the at least one headlamp unit provides ease in articulation, adequate working clearance is maintained between the handle bar assembly 108 and the cowl assembly for improved articulation.

According to the present embodiment, the support structure 300 is the direct connection to the frame assembly 102 of the complete at least one headlamp unit and eliminates the use of heavier metal brackets that makes the headlamp lighter than it could be.

It is to be understood that the aspects of the embodiments are not necessarily limited to the features described herein. Many modifications and variations of the present subject matter are possible in the light of above disclosure.

**List of reference numerals:**

| | | | |
|---|---|---|---|
| 100 | motorcycle | 204 | front cowl |
| 101 | engine assembly | 205 | bottom cowl |
| 102 | vehicle body frame | 207 | display member bracket |
| 102a | head tube | 207up | upper peripheral surface |
| 102b | extended frame member | 207Lw | lower peripheral surface |
| 103 | rear body frame | 207e | lower end point |
| 104 | front wheel | 208 | guiding-member assembly |
| 105 | rear wheel | 300a | right-side receiving portion |
| 107 | rear suspension assembly | 300b | left side receiving portion |
| 108 | handlebar assembly | 300c | bottom receiving portion |
| 109 | rider seat | 300d | top receiving portion |
| 110 | pillion seat | 300e | one or more mounting brackets |
| 111 | at least one headlamp unit | 400 | secondary structural member |
| 113 | swing arm | | |
| 114 | rear fender | | |
| 115 | front fender | | |
| 116 | fuel tank | | |
| 200C | said cowl assembly | | |
| 201, 202 | at least one mirror assembly | | |
| 210a, 210b | pair of rear covers | | |
| 203a | right-side cowl | | |
| 203b | left side cowl | | |

## Claims

1. A headlamp unit (111) for a saddle-type motorcycle (100), said motorcycle (100) comprising:
a vehicle body frame (102) including a head tube (102a); and
a cowl assembly (200C) configured to substantially enclose at least a portion of at least one headlamp unit (111),
wherein,
said headlamp unit (111) is mounted to a structural member (300), said structural member (300) configured to be attached to at least a portion of said vehicle body frame (102).

2. The headlamp unit (111) for a saddle-type motorcycle (100) as claimed in claim 1, wherein said structural member (300) is configured to be mounted to an extended frame member (102b) of said head tube (102a) of said vehicle body frame (102).

3. The headlamp unit (111) for a saddle-type motorcycle (100) as claimed in claim 1, wherein said structural member (300) is made of resin.

4. The headlamp unit (111) for a saddle-type motorcycle (100) as claimed in claim 1, wherein said at least one headlamp unit (111) is mounted to the support structure (300) through one or more mounting brackets (300e), said one or more mounting brackets (300e) are sandwiched between the support structure (300) and the at least one headlamp unit (111).

5. The headlamp unit (111) for a saddle-type motorcycle (100), as claimed in claim 1, wherein at least a portion of said at least one mirror assembly (201, 202), and a display member bracket (207) are attached to a secondary structural member (400).

6. The headlamp unit (111) for a saddle-type motorcycle (100) as claimed in claim 1, wherein said structural member (300) mounted to an extended frame member (102b) is disposed below a handlebar assembly (108), said handlebar assembly (108) is rotatably attached to said head tube (102a).

7. The headlamp unit (111) for a saddle-type motorcycle (100) as claimed in claim 1, wherein said support structure (300) is configured to include the right-side receiving portion (300a), a left side receiving portion (300b), plurality of bottom receiving portions (300c,) and a top receiving portion (300d).

8. The headlamp unit (111) for a saddle-type motorcycle (100) as claimed in claim 8, wherein said top receiving portion (300d) is configured to receive a portion of a guiding member support structure (208a).

9. A headlamp unit (111) for a saddle-type motorcycle (100), said headlamp unit (111) comprising:
a cowl assembly (200C) configured to support and protect said headlamp unit (111), said cowl assembly (200C) includes
a pair of side cowls (203a, 203b);
a bottom cowl (205);
a front cowl (204), and
a pair of rear covers (210a, 210b).

10. The headlamp unit (111) for a saddle-type motorcycle (100), as claimed in claim 2, wherein at least a portion of a guiding-member assembly (208) is sandwich mounted with said at least one mirror assembly (201, 202), and said a display member bracket (207).

11. The headlamp unit (111) for a saddle-type motorcycle (100), as claimed in claim 2, wherein said cowl assembly (200C) includes a top cowl (204), a portion of said top cowl (204) is sandwich mounted with said guiding-member assembly (208), said at least one mirror assembly (201, 202), and said display member bracket (207).

12. The headlamp unit (111) for a saddle-type motorcycle (100) as claimed in claim 2, wherein an upper peripheral surface (207up) of said display member bracket (207) is disposed to be lower than a lower end point (207e) of said guiding-member assembly (208).

13. The headlamp unit (111) for a saddle-type motorcycle (100) as claimed in claim 2, wherein a lower peripheral surface (207Lw) of said display member bracket (207) is disposed to be at a same horizontal position as that of a lower end point (207e) of said guiding-member assembly (208).

14. The headlamp unit (111) for a saddle-type motorcycle (100) as claimed in claim 2, wherein said pair of side cowls (203a, 203b) includes the right-side cowl (203a) and the left side cowl (203b), said pair of cowls (203a, 203b) are detachably attached at one end to said bottom cowl (205), said pair of cowls (203a, 203b) are detachably attached at another end of said pair of rear covers (210a, 210b).
